# EUROPÄISCHE PATENTANMELDUNG

(11) **EP 2 072 888 A2**
(43) Veröffentlichungstag der Anmeldung: **24.06.2009**
(21) Anmeldenummer: 08171036.0
(22) Anmeldetag: 09.12.2008
(51) Int. Cl.: F21S 8/12, F21V 7/00, F21W 101/10

(54) **Scheinwerfer für Fahrzeuge**

(30) Priorität: 21.12.2007 DE 102007062136
(71) Anmelder: Hella KGaA Hueck & Co., 59552 Lippstadt (DE)
(72) Erfinder: Burg, Michael, 59557, Lippstadt (DE); Peitz, Wolfgang, 59557, Lippstadt (DE)

(57) **Zusammenfassung**

Die Erfindung betrifft einen Scheinwerfer für Fahrzeuge mit einem schalenförmigen Reflektor, dem eine Glühlampe zugeordnet ist, deren Lampenkolben in Lichtaustrittsrichtung des Reflektors weist und die eine Abblendlichtwendel und eine Tagfahrlichtwendel aufweist. Die Tagfahrlichtwendel ist zwischen dem Reflektor und der Abblendlichtwendel angeordnet und der Abblendlichtwendel ist eine Blende zugeordnet, durch die bei Abblendlicht ein Reflektorabschnitt abschattbar ist, der kleiner als die halbe Reflexionsfläche des Reflektors ist. Die Blende ist oberhalb der Abblendlichtwendel angeordnet und der durch die Blende abschattbare Reflektorabschnitt ist im oberen Bereich des Reflektors angeordnet.

## Beschreibung

Die Erfindung betrifft einen Scheinwerfer für Fahrzeuge mit einem schalenförmigen Reflektor, mit einer dem Reflektor zugeordneten Glühlampe, deren Lampenkolben in Lichtaustrittsrichtung des Reflektors weist und die eine Abblendlichtwendel und eine Tagfahrlichtwendel aufweist, wobei die Tagfahrlichtwendel zwischen dem Reflektor und der Abblendlichtwendel angeordnet ist und der Abblendlichtwendel eine Blende zugeordnet ist, durch die bei Abblendlicht ein Reflektorabschnitt abschattbar ist.

Aus der EP 1 382 900 B1 ist ein Scheinwerfer für Fahrzeuge bekannt, bei dem die Lampe eine Abblendlichtwendel und eine Tagfahrlichtwendel aufweist. Unterhalb der Abblendlichtwendel ist eine Blende angeordnet, durch die bei Abblendlicht ein Reflektorabschnitt abschattbar ist, der in einem unteren Bereich des Reflektors angeordnet ist. Der nicht abgeschattete obere Bereich des Reflektors ist für Abblendlicht und der abgeschattete Bereich für Tagfahrlicht ausgelegt. Da die der Abblendlichtwendel zugeordnete Blende unterhalb dieser angeordnet ist, verlaufen die direkt aus der Abblendlichtwendel nach vorne gerichteten Lichtstrahlen oberhalb der Hell-Dunkel-Grenze des Abblendlichtbündels. Dadurch können die Fahrer der entgegenkommenden Fahrzeuge geblendet werden.

Aus dem Dokument der Economic und Social Council der United Nations ECE/TRANS/WP.29/GRE2006/35 vom 21 Juli 2006 (zu finden unter http://www.unece.org/trans/doc/2006/wp29gre/ECE-TRANS-WP29-GRE-2006-35e.doc) ist eine Glühlampe mit der Bezeichnung H15 für einen Scheinwerfer für Fahrzeuge bekannt. Die Glühlampe weist einen Tagfahrlichtwendel und eine Abblendlichtwendel auf. Der Abblendlichtwendel ist eine Blende zugeordnet, die zur Abschattung eines Reflektorabschnitts eines Reflektors dient, wobei die Tagfahrlichtwendel zur Ausleuchtung des gesamten Reflektors ausgelegt ist. Bei bekannten Zweifaden-Glühlampen ist eine Blende unterhalb einer Glühwendel angeordnet.

Aufgabe der Erfindung ist es, den im Oberbegriff des Anspruchs 1 beschriebenen Scheinwerfer derart zu gestalten, dass durch die der Abblendlichtwendel zugeordnete Blende keine Lichtstrahlen entstehen, die den Fahrer eines entgegenkommenden Fahrzeugs blenden können. Diese Aufgabe wird nach der Erfindung dadurch gelöst, dass die Blende oberhalb der Abblendlichtwendel angeordnet ist, wobei der durch die Blende abschattbare Reflektorabschnitt im oberen Bereich des Reflektors angeordnet ist und kleiner als die halbe Reflexionsfläche des gesamten Reflektors ist. Dadurch sind auch die direkt nach vorn austretenden Lichtstrahlen der Abblendlichtblende an der Ausleuchtung der Fahrbahn beteiligt ohne den Gegenverkehr zu blenden und die bei Abblendlicht wirksame Reflexionsfläche ist größer als die abgeschattete Reflexionsfläche des Reflektors. Als Glühlampe ist die H15-Lampe vorteilhaft, die nach der vorstehend bezeichneten Norm eine Fernlicht- und Tagfahrlichtwendel aufweist.

In den meisten Scheinwerfern sind Zweifaden-Glühlampen mittig im Reflektor platziert, wobei die Blende unterhalb einer Glühlampenwendel angeordnet ist. Bei dieser bekannten Anordnung würde sich bei der Glühlampe (H15-Glühlampe) ein ungünstiges Verhältnis zwischen der nutzbaren Fläche für Abblendlicht- und Tagfahrlicht ergeben, d.h. für das Abblendlicht steht zuwenig Fläche zur Verfügung, während das Tagfahrlicht mehr Fläche als nötig hat. Bei einem Verschieben der Glühlampe nach unten, um dem Abblendlicht mehr Fläche zur Verfügung zu stellen, ist der Reflektor am vorderen Rand so geneigt, dass das obere Ende weit nach vorne ragt. Die heute üblichen Abschlussscheibe verlaufen jedoch in entgegengesetzte Richtung geneigt. Eine solche Anordnung ist nur bei entsprechend großen Einbautiefen am Fahrzeug möglich. Bei einer vorteilhaften Weiterbildung der Erfindung können dies Nachteile beseitigt werden, wenn der durch die Blende abschattbare obere Reflektorabschnitt eine für Tagfahrlicht ausgelegte Reflexionsfläche und der Reflektor unterhalb der für Tagfahrlicht ausgelegten Reflexionsfläche eine für Abblendlicht ausgelegte untere Reflexionsfläche aufweist, wobei die obere Reflexionsfläche für Tagfahrlicht maximal 25% der gesamten Reflexionsfläche des Reflektors entspricht oder die Lampe entgegen der Lichtaustrittsrichtung des Reflektors gesehen und ausgehend von der Mitte des Reflektors einen Versatz nach oben hin von mindestens 5%, vorzugsweise 8 bis 12% der Reflektorhöhe aufweist oder der gesamte Lampenkolben entgegen der Lichtaustrittsrichtung des Reflektors gesehen, in der oberen Hälfte des Reflektors angeordnet ist. Durch eine außermittig des Reflektors angeordnete Position der Lampe kann die Flächenaufteilung zwischen Tagfahrlicht und Abblendlicht den lichttechnischen Erfordernissen der Lichtfunktionen genau angepasst werden. Somit kann der Reflektor so gestaltet sein, dass möglichst viel Lichtleistung für das Abblendlicht, aber noch genügend für das Tagfahrlicht zur Verfügung steht. Dabei ist der obere Rand des Reflektors gegenüber seinem unteren Rand zur Rückseite des Reflektors nach hinten zurückversetzt angeordnet. Dies ist erst möglich durch den außermittigen Versatz der Glühlampe nach oben hin und die Form des Reflektors kann dieser mit seinem vorderen Rand der Neigung der Abschlussscheibe der Scheinwerfers, die nach oben hin schräg nach hinten verläuft, angepasst werden.

Der Reflektor ist optisch vorteilhaft ausgelegt, wenn die obere Reflexionsfläche für Tagfahrlicht eine das Licht der Tagfahrlichtwendel streuende Optikfläche aufweist, die eine obere Teillichtverteilung erzeugt, die zusammen mit einer unteren Teillichtverteilung, die der untere Reflektorabschnitt für Abblendlicht erzeugt, eine Gesamtlichtverteilung für Tagfahrlicht ergibt. In diesem Zusammenhang ist es vorteilhaft, wenn das Licht der Tagfahrlichtwendel an der unteren Reflexionsfläche mindestens zwischen 15° und 25°, vorzugsweise zwischen 18° bis 22°, und an der oberen Reflexionsfläche mindestens zwischen 10° bis 15° streut.

Anhand der beigefügten Zeichnungen wird die Erfindung nachfolgend näher erläutert. Dabei zeigt:
- Fig. 1: in einem vertikalen mittleren Teilschnitt durch einen Scheinwerfer für Fahrzeuge einen Reflektor mit einer Tagfahrlicht- und Abblendlichtwendel und mit dem Verlauf der Lichtstrahlen der Abblendlichtwendel, wobei oberhalb der Abblendlichtwendel eine Blende angeordnet ist,
- Fig. 2: in einem vertikalen mittleren Teilschnitt den Reflektor der Figur 1 mit dem Verlauf der Lichtstrahlen der Tagfahrlichtwendel,
- Fig. 3: in einer Vorderansicht den Reflektor der Figuren 1 und 2 mit einer außermittig angeordneten Aufnahmeöffnung der Glühlampe,
- Fig. 4: in einer Vorderansicht einen anderen Reflektor eines Scheinwerfers für Fahrzeuge mit einer mittig angeordneten Aufnahmenöffnung für eine Glühlampe,

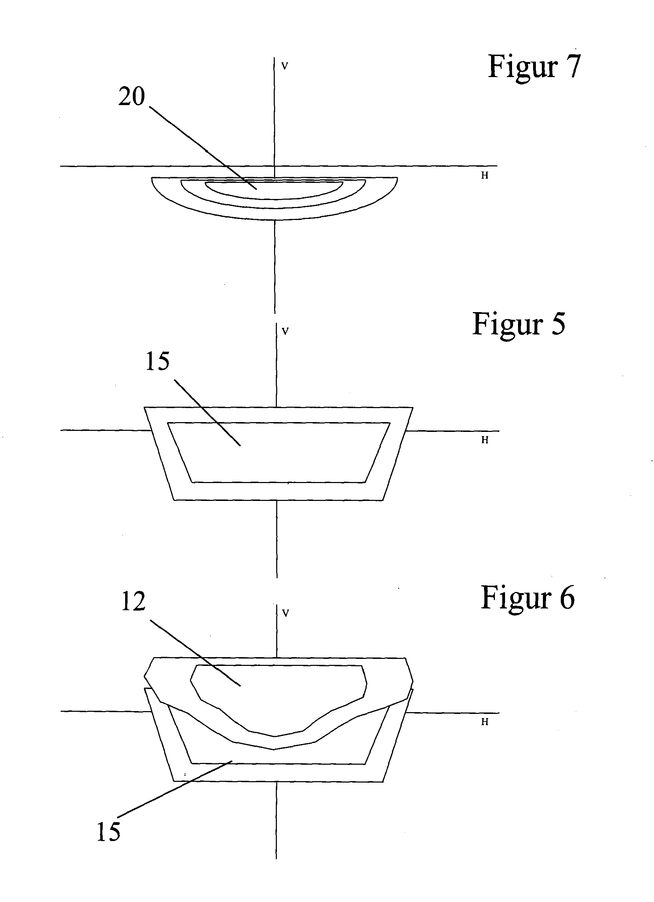

- Fig. 5: eine untere Teillichtverteilung, die von dem unteren Reflexionsabschnitt des Reflektors der Figuren 1 bis 3 durch die Tagfahrlichtwendel erzeugt wird,
- Fig. 6: eine Gesamtlichtverteilung für Tagfahrlicht, die sich aus der unteren Teillichtverteilung und einer oberen Teillichtverteilung zusammensetzt, die von einem oberen Reflexionsabschnitt des Reflektors erzeugt wird, und
- Fig. 7: eine Lichtverteilung für Abblendlicht, die von dem unteren Reflexionsabschnitt des Reflektors der Figuren 1 bis 3 durch die Abblendlichtwendel erzeugt wird.

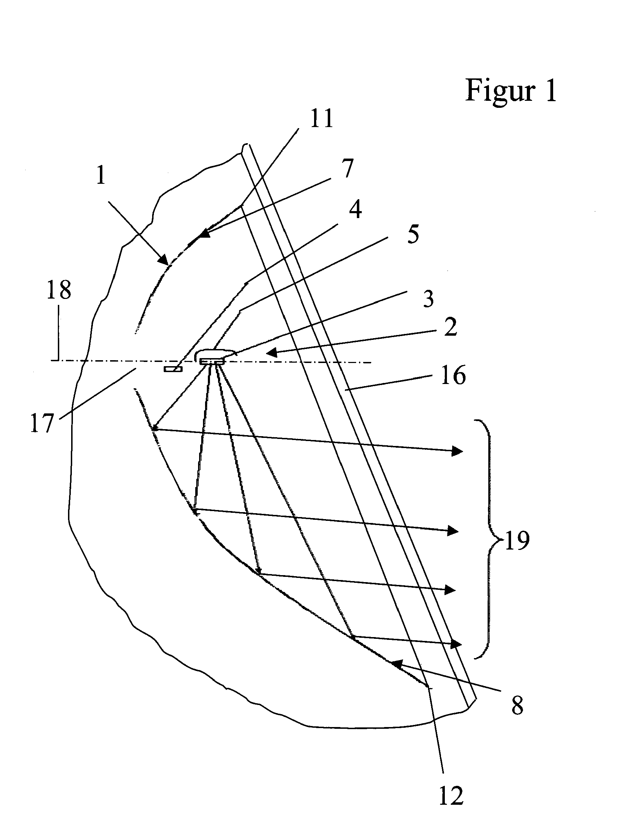

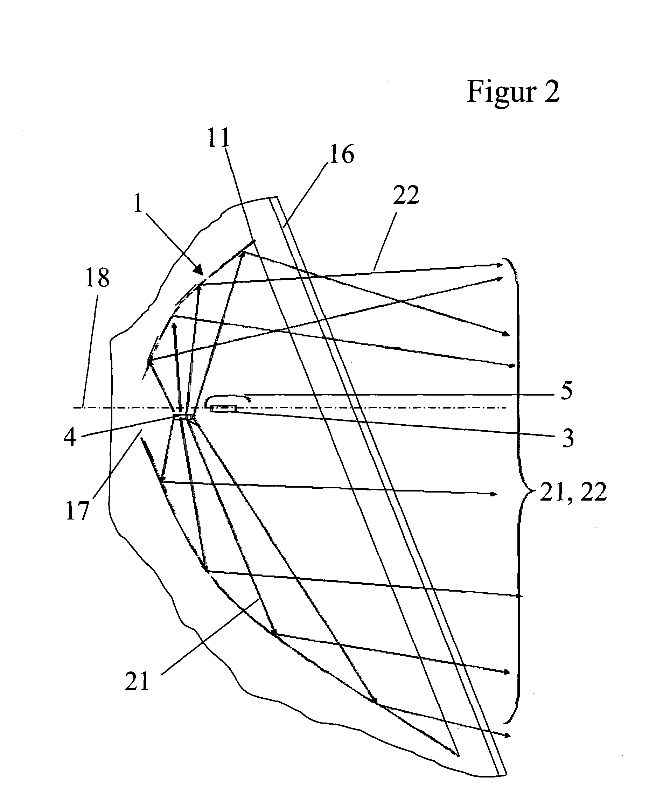

Der Scheinwerfer für Fahrzeuge nach den Figuren 1 und 2 weist ein topfförmiges Gehäuse (nicht dargestellt) und ein die Vorderseite des Gehäuse abdeckende lichtdurchlässige Abschlussscheibe 16 auf, die zumindest abschnittsweise frei von Optikelementen ist. Somit kann man in durch die Abschlussscheibe 16 hindurch in das Innere des Scheinwerfer hinein sehen. Die Abschlussscheibe 16 ist nach oben hin nach hinten geneigt, d.h. der oberen Rand der Abschlussscheibe 16 ist gegenüber dem unteren Rand nach hinten zurückversetzt.

Hinter der schräg verlaufenden Abschlussscheibe 16 ist ein schalenförmiger Reflektor 1 angeordnet. Der Reflektor 1 besteht aus Kunststoff und weist im hinteren Bereich eine Aufnahmeöffnung 17 für eine Glühlampe (H15-Lampe) auf, die nach einer Norm für Fernlicht und Tagfahrlicht vorgesehen ist und hierbei für Abblendlicht und Tagfahrlicht genutzt ist. Somit weist die Glühlampe im Reflektor 1 eine Tagfahrlichtwendel 4, eine Abblendlichtwendel 3 und eine der Abblendlichtwendel 3 zugeordnete wannenförmige Blende 5 auf. Die Tagfahrlichtwendel 4 ist zwischen der Aufnahmeöffnung 17 und der Abblendlichtwendel 3 angeordnet, wobei die Abblendlichtwendel 3 auf einer Achse 18 liegt, die die Längsachse der Glühlampe bzw. die optische Achse des Reflektors 1 ist, und die Tagfahrlichtwendel 4 etwas unterhalb der Achse 18 liegt. Die wannenförmige Blende 5 ist oberhalb der Abblendlichtwendel 3 und symmetrisch zur einer vertikalen mittleren Linie 9 angeordnet ist. Die Blende 5 schirmt eine obere Reflexionsfläche 7 eines oberen Reflektorabschnitts 6 ab. Die durch die Blende 5 abgeschirmte Reflexionsfläche 7 ist kleiner als die Reflexionsfläche, die oberhalb einer horizontalen Fläche liegt, in der die Achse 18 verläuft. Auf die an die obere Reflexionsfläche 7 angrenzende untere Reflexionsfläche 8, die als Freiformfläche ausgebildet sein kann, sind die Abblendlichtstrahlen 19 gerichtet, die die untere Reflexionsfläche 8 zu einem weit in die Ferne reichendem Lichtbündel sammelt. Das Abblendlichtbündel erzeugt eine symmetrische Abblendlichtverteilung. Hierbei ist das symmetrische Abblendlicht ein Nebellicht.

Die auf die untere Reflexionsfläche 8 auftreffenden Lichtstrahlen 21 der Tagfahrlichtwendel 4 erzeugen wegen ihrer Defokussierung zur unteren Reflexionsfläche 8 eine rechteckförmige bzw. trapezförmige untere Teillichtverteilung 15. Die obere Reflexionsfläche 7 ist für Tagfahrlicht optimal ausgelegt und die auf die obere Reflexionsfläche 7 auftreffenden Lichtstrahlen erzeugen eine Teillichtverteilung 12, die teilweise oberhalb der unteren Teillichtverteilung 15 angeordnet ist.

Bei dem Reflektor 1 nach den Figuren 1, 2 , 8 und 9 ist die Aufnahmeöffnung 17 außermittig des Reflektors 1 angeordnet. Die Aufnahmeöffnung 17 ist entgegen der Lichtaustrittsrichtung des Reflektors 1 gesehen nach oben hin versetzt (Versatz 10) angeordnet. Die äußeren Reflektorabmessungen liegen zwischen 90 und 110 mm und der Versatz 10 beträgt etwa 8 bis 12 % der äußeren Reflektorabmessung. Durch den Versatz 10 kann die gesamte Reflexionsfläche des Reflektors 1 so ausgelegt werden, dass der vordere Rand des Reflektors 1 ebenso wie die Abschlussscheibe 16 nach oben hin schräg nach hinten verläuft. Dabei kann der vordere Rand des Reflektors 1 etwa in einem äquidistanten Abstand zur Abschlussscheibe 16 verlaufen.

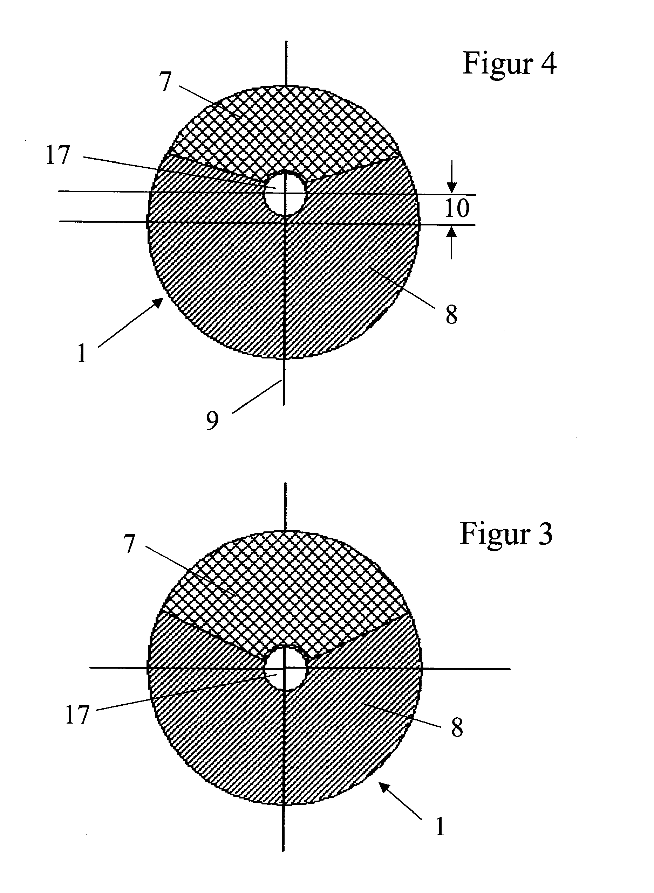

Bei dem Reflektor 1 der Figur 3 ist die Aufnahmeöffnung 17 mittig im Reflektor 1 angeordnet.

### Bezugszeichenliste

- 1.: Reflektor
- 2.: Glühlampe
- 3.: Abblendlichtwendel
- 4.: Tagfahrlichtwendel
- 5.: Blende
- 6.: oberer Reflektorabschnitt
- 7.: obere Reflexionsfläche
- 8.: untere Reflexionsfläche
- 9.: vertikale Linie
- 10.: Versatz
- 11.: oberer Rand
- 12.: obere Teillichtverteilung
- 13.: bogenförmige Streifenabschnitte
- 14.: vertikale Streifenabschnitte
- 15.: untere Teillichtverteilung
- 16.: Abschlussscheibe
- 17.: Aufnahmeöffnung
- 18.: Achse
- 19.: Abblendlichtstrahlen
- 20.: Abblendlichtverteilung
- 21.: Lichtstrahlen
- 22.: Lichtstrahlen

## Patentansprüche

1. Scheinwerfer für Fahrzeuge mit einem schalenförmigen Reflektor (1), mit einer dem Reflektor (1) zugeordneten Glühlampe (2), deren Lampenkolben in Lichtaustrittsrichtung des Reflektors (1) weist und die eine Abblendlichtwendel (3) und eine Tagfahrlichtwendel (4) aufweist, wobei die Tagfahrlichtwendel (4) zwischen dem Reflektor (1) und der Abblendlichtwendel (3) angeordnet ist und der Abblendlichtwendel (3) eine Blende (5) zugeordnet ist, durch die bei Abblendlicht ein Reflektorabschnitt (6) abschattbar ist,
**dadurch gekennzeichnet, dass** die Blende (5) oberhalb der Abblendlichtwendel (3) angeordnet ist, wobei der durch die Blende (5) abschattbare Reflektorabschnitt (6) im oberen Bereich des Reflektors (1) angeordnet ist und kleiner als die halbe Reflexionsfläche des gesamten Reflektors (1) ist.

2. Scheinwerfer nach Anspruch 1, **dadurch gekennzeichnet, dass** der durch die Blende (5) abschattbare obere Reflektorabschnitt (6) eine für Tagfahrlicht ausgelegte Reflexionsfläche (7) aufweist und der Reflektor unterhalb der für Tagfahrlicht ausgelegten Reflexionsfläche eine für Abblendlicht ausgelegte untere Reflexionsfläche (8) aufweist..

3. Scheinwerfer nach einem der Ansprüche 1 bis 2, **dadurch gekennzeichnet, dass** die obere Reflexionsfläche (6) für Tagfahrlicht maximal 25% der gesamten Reflexionsfläche des Reflektors (1) entspricht.

4. Scheinwerfer nach einem der Ansprüche 1 bis 3, **dadurch gekennzeichnet, dass** die Glühlampe (2) entgegen der Lichtaustrittsrichtung des Reflektors (1) gesehen und ausgehend vom von der Mitte des Reflektors (1) einen Versatz (10) nach oben hin aufweist.

5. Scheinwerfer nach Anspruch 4, **dadurch gekennzeichnet, dass** die Lampe (2) mindestens einen Versatz nach oben hin von mindestens 5%, vorzugsweise um 8 bis 12%, der Reflektorhöhe aufweist.

6. Scheinwerfer nach einem der Ansprüche 1 bis 5, **dadurch gekennzeichnet, dass** entgegen der Lichtaustrittsrichtung des Reflektors (1) gesehen, der gesamte Lampenkolben in der oberen Hälfte des Reflektors (1) angeordnet ist.

7. Scheinwerfer nach einem der Ansprüche 1 bis 6, **dadurch gekennzeichnet, dass** der obere Rand (11) des Reflektors (1) gegenüber seinem unteren Rand (12) zur Rückseite des Reflektors (1) nach hinten zurückversetzt angeordnet ist.

8. Scheinwerfer nach einem der Ansprüche 1 bis 7, **dadurch gekennzeichnet, dass** bei eingeschalteten Tagfahrlicht die untere Reflexionsfläche (8) eine rechteckförmige oder trapezförmige Teillichtverteilung (15) und die obere Reflexionsfläche (7) eine obere Teillichtverteilung (12) erzeugt, die teilweise oberhalb dieser verläuft.

9. Scheinwerfer nach einem der Ansprüche 1 bis 8, **dadurch gekennzeichnet, dass** die obere Reflexionsfläche (7) für Tagfahrlicht eine das Licht der Tagfahrlichtwendel (4) streuende Optikfläche aufweist, die eine obere Teillichtverteilung (12) erzeugt, die zusammen mit einer unteren Teillichtverteilung (1), die die untere Reflexionsfläche (8) für Abblendlicht erzeugt, eine Gesamtlichtverteilung für Tagfahrlicht ergibt.

10. Scheinwerfer nach Anspruch 9, **dadurch gekennzeichnet, dass** das Licht der Tagfahrlichtwendel (4) an der unteren Reflexionsfläche (8) mindestens zwischen 15° und 25°, vorzugsweise zwischen 18° bis 22°, und an der oberen Reflexionsfläche (7) mindestens zwischen 10° bis 15° streut.

11. Scheinwerfer nach einem der vorstehenden Ansprüche, **dadurch gekennzeichnet, dass** die Blende und die für Abblendlicht dienende Reflexionsfläche symmetrisch zur einer vertikalen Mittelebene, in der die Längsachse der Glühlampe verläuft, angeordnet sind und ein symmetrisches Abblendlichtbündel erzeugen.

12. Scheinwerfer nach einem der vorstehenden Ansprüche, **dadurch gekennzeichnet, dass** die Blende und die für Abblendlicht dienende Reflexionsfläche asymmetrisch zur einer vertikalen Mittelebene, in der die Längsachse der Glühlampe verläuft, angeordnet sind und ein asymmetrisches Abblendlichtbündel erzeugen.
